# EUROPEAN PATENT SPECIFICATION

(11) **EP 0 501 743 B1**
(45) Date of publication and mention of the grant of the patent: **01.10.1997**
(21) Application number: 92301560.6
(22) Date of filing: 25.02.1992
(51) Int. Cl.: G01S 7/52, G01S 15/96, G01R 29/027

(54) **A circuit for processing pulses**
Schaltung zur Verarbeitung von Pulsen
Circuit pour le traitement d'impulsions

(30) Priority: 25.02.1991 GB 9103867
(43) Date of publication of application: 02.09.1992
(73) Proprietor: SALUBRE INVESTMENTS LIMITED, Cork (IE)
(72) Inventor: Burns, David, Douglas, Cork (IE)
(74) Representative: Godsill, John Kenneth

(56) References cited:
- EP-A- 0 156 636
- WO-A-90/00745
- DE-A- 3 937 585
- PATENT ABSTRACTS OF JAPAN vol. 6, no. 252 (P-161)(1130) 10 December 1982 & JP-A-57 149 908

## Description

The present invention relates to a circuit for processing pulses, for example in echosounding and fish detection. It has application to the detection of pulses of at least a given amplitude e.g. for use in bottom pulse acquisition in echo-sounders.

Echo-sounders are often provided on board ships and other such vessels and include an arrangement, for example including a transducer arrangement, to direct signals towards a target such as the bottom of a body of water and an arrangement to detect any reflected signals from that target. However, a major problem inherent in the operation of echo-sounders is due to the effect of rough seas causing the vessel, and hence the transducer arrangement, to pitch and roll. The problem is caused because, as the vessel moves, so does the transmitting axis of the transducer relative to the direction normal to the target. The resulting reflected beam has an increased width and decreased amplitude when the transducer axis is not normal to the target. The overall effect is worsened with narrower width transmitted beams. This effect even causes problems on larger vessels.

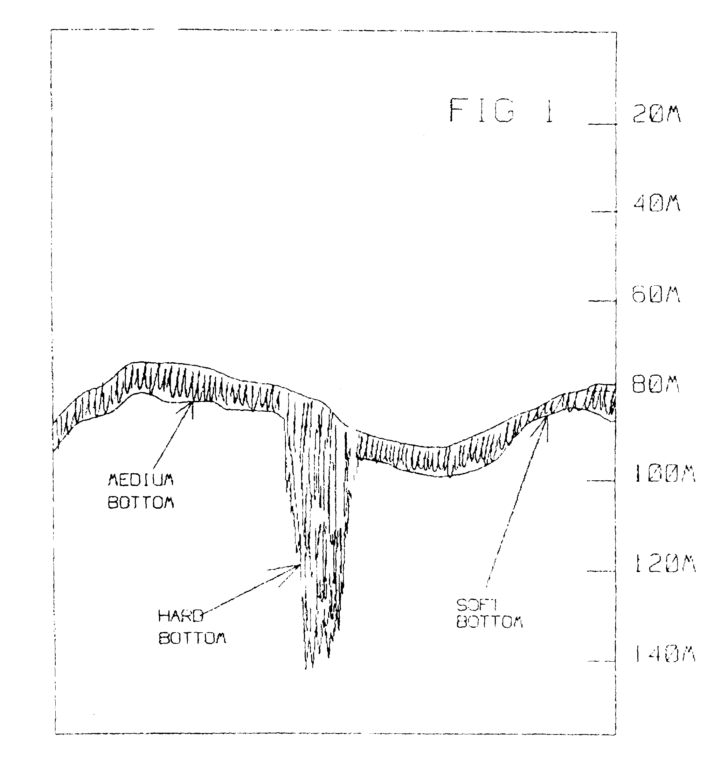

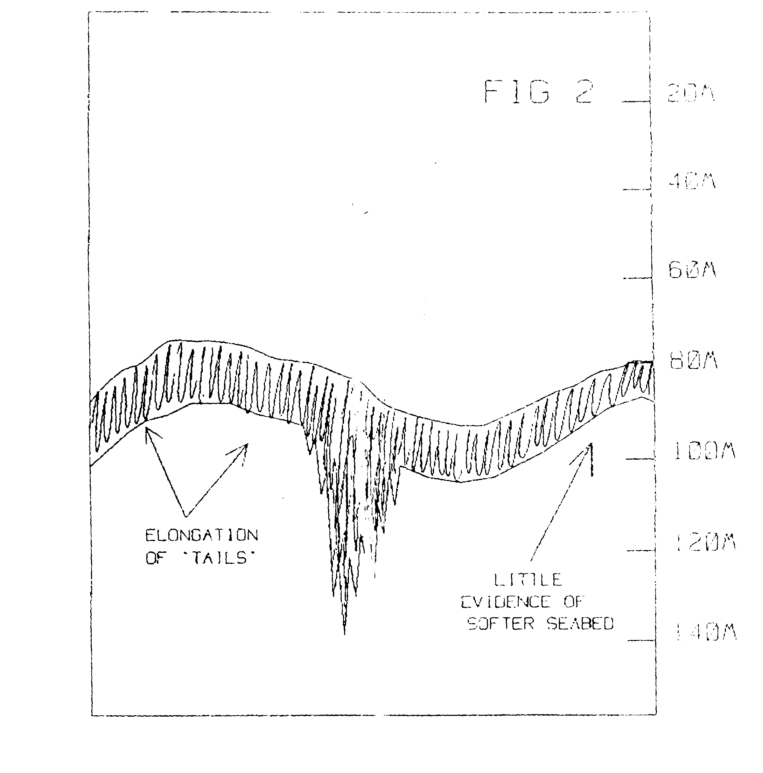

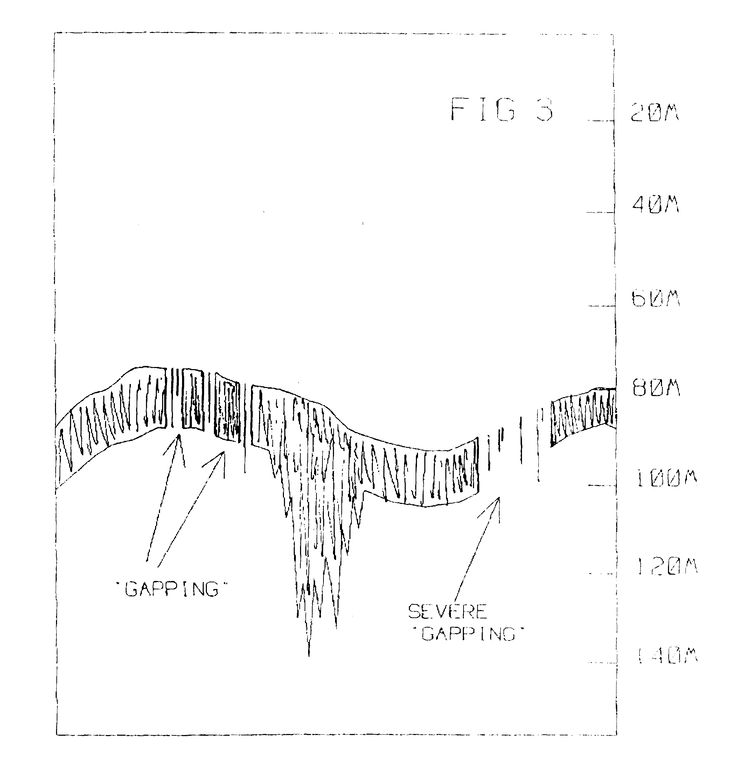

Figure 1 of the accompanying drawings shows a typical echogram of a seabed in smooth sea conditions obtained using an echosounder with a single transducer. The echogram shows the differences in the reflected beam resulting from differing degrees of roughness of the seabed traversed by the vessel. Figures 2 and 3 show the effect on that echogram of a widely swinging beam resulting respectively from medium-to-bad and bad sea conditions. As can be seen, there is severe distortion of the signal, for example the displayed lengths of the "tails", often used by fishermen as a crude form of seabed identification, become elongated. We believe this is due to the changed angle of the sound wave transmission path and aeration. The phenomenon known as "gapping" (see Figure 3) may also occur for considerable periods of time. During "gapping" some pulses can be received but these may only occur as single strokes of a stylus (or "write" if the system is under microprocessor or logic circuit control). The net effect will be that the data displayed in respect of the seabed discrimination will either be distorted or totally unintelligible.

Echosounders are also often used for detecting fish. However when detecting fish, the reflection of fish echoes from non-vertical beams as displayed on a conventional vertically oriented echosounder can be misleading in two respects. Firstly, fish may be displayed as if they were directly under the vessel and, secondly, fish close to the seabed but beyond the radius of the minimum water depth will be merged and obscured by inclusion within the seabed image or within the so-called dead zone.

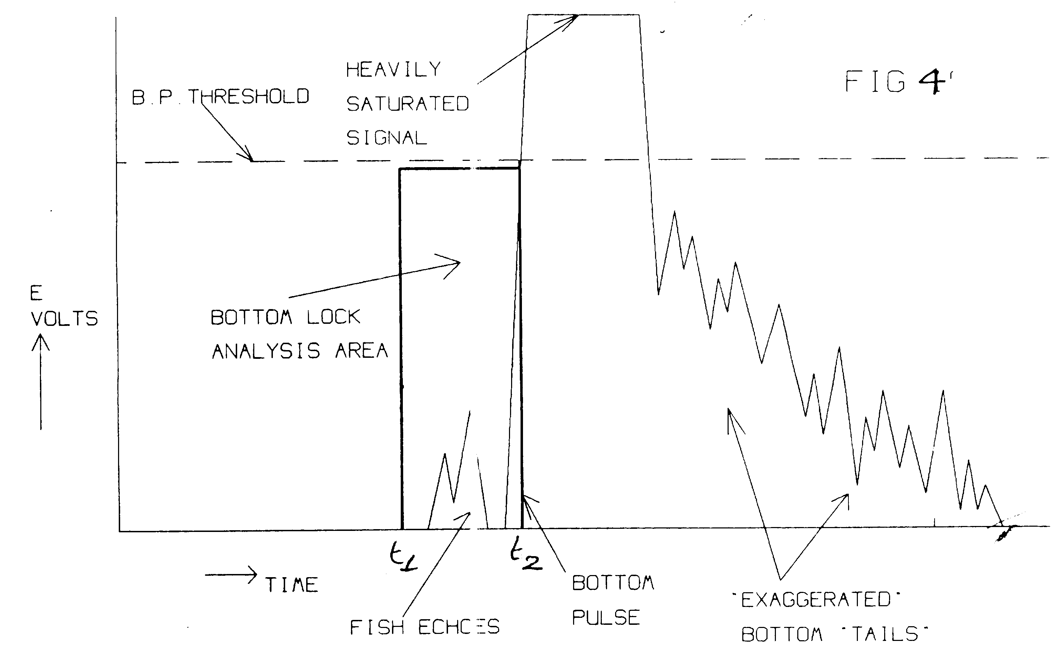

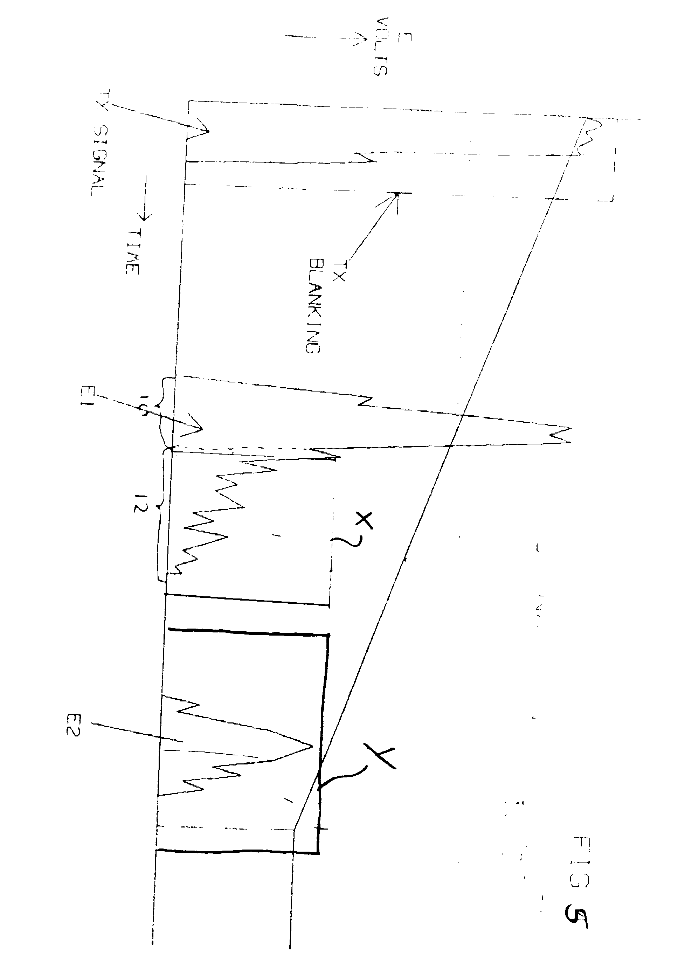

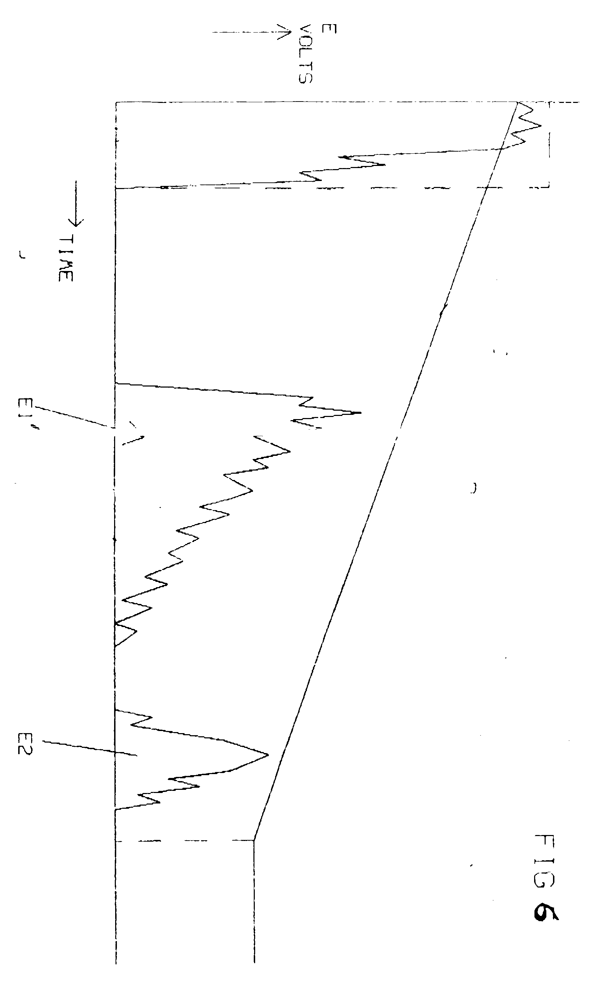

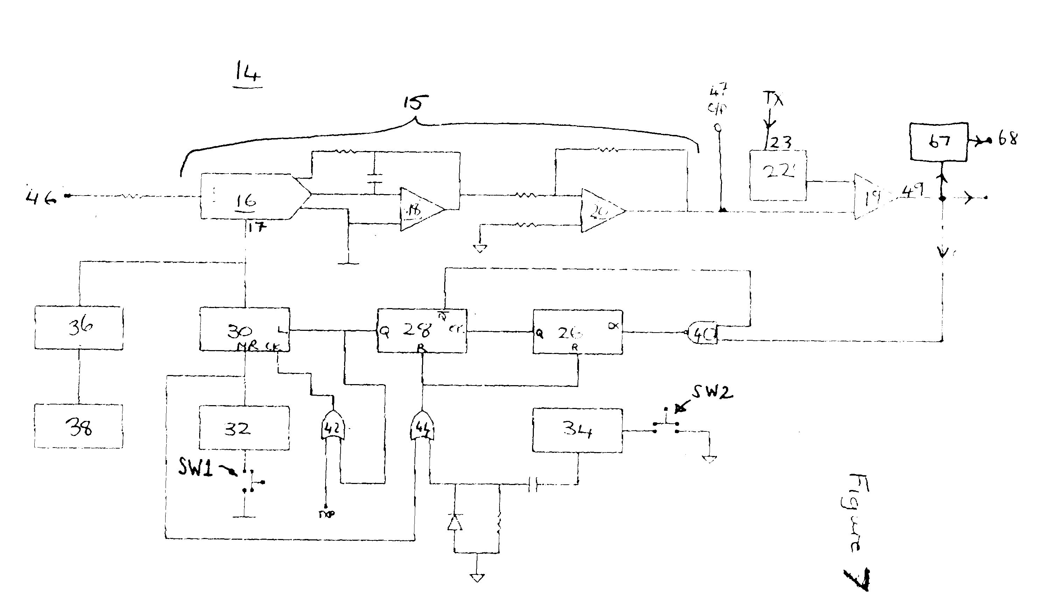

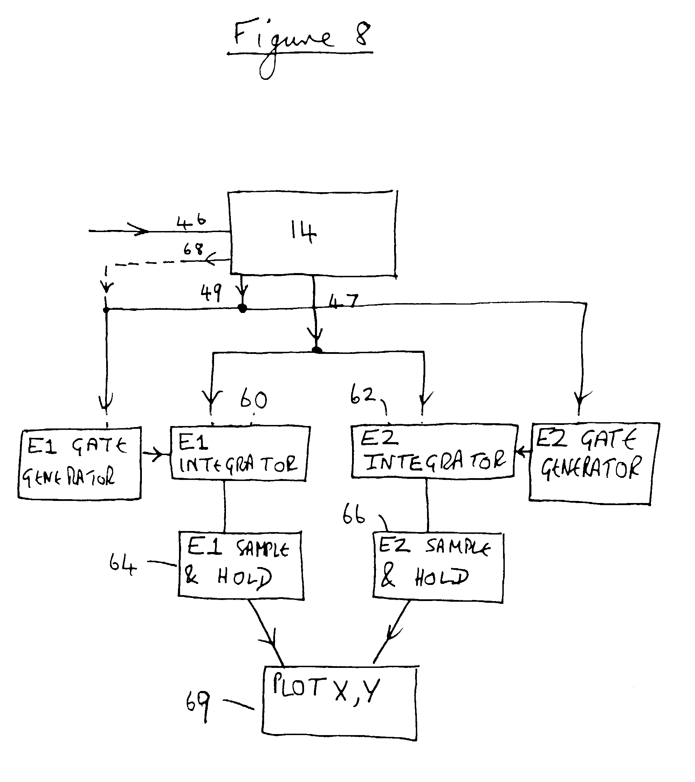

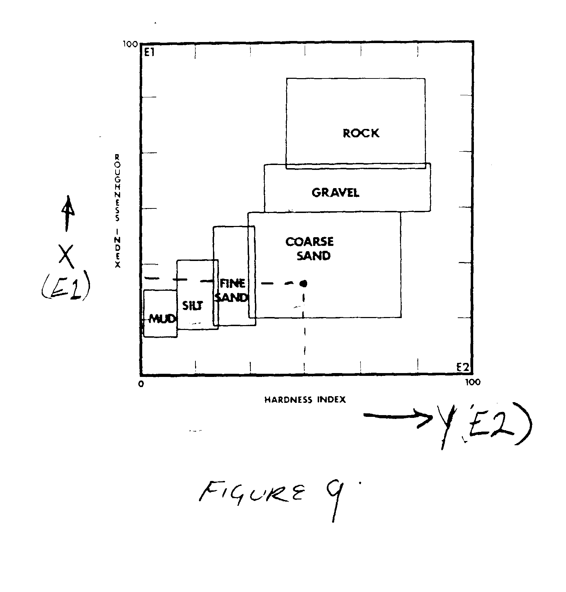

In other echosounders, sea bed or bottom locked data is displayed at the screen (see for example, Fisheries Sonar by R.B. Mitson, 1983, Fishing News Books Ltd. pages 127-138). Such systems tend to use saturated signals so that, even in rough seas, the reflected signal will exceed the threshold value. Figure 4 shows, for a smooth sea situation, a typical saturated signal as seen on an oscilloscope. The signal may have been time variable gain (TVG) processed according to a 20 or 40 log R function. A bottom locked gating period t₁ - t₂ is defined. The gating period is ended at a time t2 determined by the reflected signal exceeding a given threshold value. The time t₁ is a given time before the expected occurrence of t₂ as determined from the previous transmissions or preferably by the use of a shift register which stores a digital representation of the received signal. Once the "bottom pulse" is detected, the stored data in the shift register is displayed from, say, 3 ms ahead of the "bottom pulse". The data in that period is displayed on the screen and, in smooth seas, can give a good indication as to the presence of fish. This is because the fish echoes can be clearly distinguished from the reflected signal. However, in rough seas, the reflected pulse as received is distorted and the fish echoes can no longer be clearly distinguished, if at all. This reflects a general problem also affecting surface-locked data, e.g. for midwater echoes and depth measurement. A system to counteract this problem is the steered beam assembly. In older systems the beam was controlled mechanically but in more modern equipment this is performed electronically using either multiple transducer arrays, or by using electronic beam forming techniques. The objective of such equipment is to sense the orientation of the platform or vessel from the normal or vertical to the seabed and to ensure that an optimum path within the water is used for the sound beam, botn on transmission and on reception, or on reception only. The method used by such steered beam assembly arrangements is also of importance for the correct interpretation of both biomass and position of fish echoes directly beneath the transducer.

A disadvantage with steered beam and multibeam echosounders is that they require expensive transducers and considerable processing power to acquire data from beams from which the orientation is specifically selected.

According to one aspect of the invention, there is provided a pulse echo processing device, for use with pulse/transmitting receiving equipment, the device comprising means for defining a function, which may vary with time, and means for comparing a received echo signal with that function to produce an output when the level of the received echo signal exceeds the instantaneous level of said function, characterised by automatic means for repetitively adjusting the relative magnitude of said function and the received signal in dependence upon said output until a given relationship exists between said levels.

In one embodiment of the invention, the adjusting means are provided by means for adjustably amplifying the received signal. The received signals are amplified until they exceed the instantaneous values of the function. The gain of the amplifying means is then fixed at that level so as to provide a level at which to detect subsequent received signals relative to the function.

In another embodiment of the invention, the adjusting means are provided by means for reducing the overall magnitude of the function. The values are reduced until the received signals exceed those values. The function is then fixed at that level.

According to a second aspect of the invention, there is provided a method a method of processing received echo pulses characterised by: transmitting a pulse receiving a consequent echo signal; defining a function, which may vary with time; comparing the received signal with that function; producing an output when the level of the received signal exceeds the instantaneous level of the function; and repetitively adjusting the relative magnitude of the function and the received signal in dependence upon said output until a given relationship exists between said levels.

In one application of such a device and method, the given relationship is such that the received signal exceeds the instantaneous level of said function during subsequent use only when the transmission is vertical or is within a given, narrow, range about the vertical. The resulting identification can be used as a signal as to the time of occurrence of a received pulse arising from a substantially vertically transmitted and reflected pulse, i.e. it identifies the position of the true bottom in the time domain. Moreover such a signal can be used as an identification of when the transmission and reception is within a given range of the vertical, so as to allow processing of signals thus identified and to reject other signals. In this way, poor signals can be rejected, thus alleviating certain problems occurring with both bottom-locked and surface-locked data in bad sea conditions.

In a modification, means may be provided to adjust the relative magnitude over a narrow range, using a suitable time constant, automatically to adjust for received signals tending to fall just below the threshold automatically set initially.

We shall now proceed to another, but related, topic.

In known equipment, as already described with reference to Figure 4, in rough seas the point t₂ is not representative of the true bottom. The inventor has realised, according to another aspect of the invention, that using the true bottom signal to assist in defining time periods over which to analyze reflected signal data can provide a better indication of what is producing the reflection. This is so whether the above-described device or method is used to detect verticality of a swinging beam or other means are used.

Thus, according to a third aspect of the invention, there is provided a method of echosounding comprising using a swinging transmitting element to transmit pulses toward the bottom of a body of water, detecting the resulting reflected signals, determining when said transmitting element is transmitting substantially normal to the bottom and using the resulting reflected signal to locate the bottom echo pulse relative to the transmitted pulse, and using that location to define a time period in which to analyze the resulting return signal, wherein processing of the return signal is carried out by a method according to the second aspect.

According to a fourth aspect of the invention, there is provided an echosounder device comprising a swinging transmitting element for transmitting pulses toward the bottom of a body of water, means for detecting the resulting reflected signal, means for determining when said transmitting element is transmitting substantially normal to the bottom means and for using the resulting reflected signal to locate the bottom echo pulse relative to the transmitted pulse, and means for using that location to define a time period in which to analyze the resulting return signal, the device also including a device according to the first aspect for processing the reflected signal.

For a better understanding of the present invention and how the same may be carried into effect, reference will now be made by way of example to the accompanying drawings in which:
Figure 5 shows the effect of smooth sea on an observed oscilloscope signal;
Figure 6 shows the effect on the oscilloscope signal of Figure 5 of rough sea conditions;
Figure 7 shows a pulse processing circuit,
Figure 8 shows part of a system into which the circuit of Figure 7 can be incorporated; and
Figure 9 shows displayed data collected by the system of Figure 8; and
Figure 10 indicates a bottom lock analysis area.

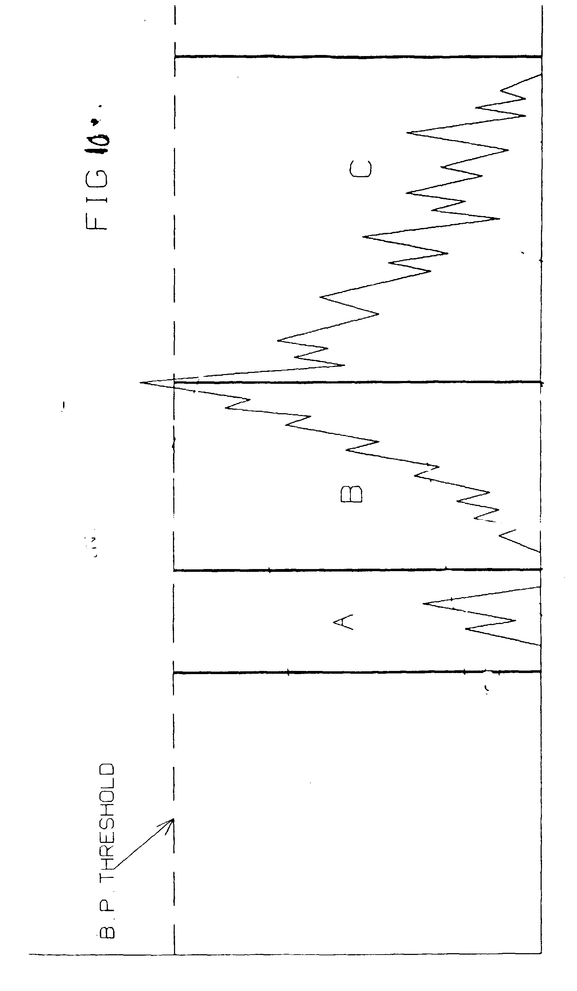

Figure 5 shows a typical signal observed on an oscilloscope during echosounding in good conditions. Pulse TX represents the transmitted signal whilst pulses E1 and E2 represent the first and second return signal components (bottom echoes) respectively. As can be seen, pulse E1 has a first portion 10 with a relatively large amplitude and a second, tail, portion 12 with a relatively small amplitude but larger spread. The first portion 10 represents the parts of the signal reflected substantially normal to the target. The second portion 12 represents the parts of the signal which are transmitted and reflected at an angle to the seabed. As can be seen, the first portion 10 of the signal dominates.

Figure 6 shows a similar signal to that shown in Figure 5, but in rough seas. As can be seen, the first return signal component E1' has a much smaller peak amplitude and is a much wider signal. This type of signal is caused by the transmitted signal swinging away from and towards the normal to the target as the vessel pitches and rolls. As illustrated by these two figures, the peak amplitude of the first return signal component can vary considerably as the transducer is subjected to rocking motion. Since the highest amplitude of the first return signal component (as shown in Figure 5) only occurs when the transducer axis is at or near the normal to the seabed, the inventor has realised that a circuit designed to capture only those signals which are above a chosen amplitude (i.e. relate to substantially vertical transmission paths) would be able to compensate for the effect of rough seas.

Such a circuit 14 is shown in Figure 7. Circuit 14 has a variable gain amplifier 16 and inverting amplifiers 18 and 20 arranged in series along a path 15 from an input 46 to an output 47. The maximum gain of this part of the circuit is unity. The inverting amplifier 18 dictates the dynamic range of the circuit.

An output signal from the path 15 is also coupled to a first input of a comparator 19. A second input of the comparator 19 is connected to the output of a signal generator 22, in this example a linear ramp generator. Output 49 of the comparator 19 provides a control signal, e.g. to provide a write-enabling signal for microprocessor memory circuits, or logic circuits, or to provide the normal echo-sounder analogue block and enable signals. A one-shot 67 triggered by the pulse on output 49 may also be provided.

The following elements are coupled between the output of the comparator 19 and a control input 17 of the amplifier 16 to provide a feedback circuit: a gate 40; two flip-flops 26 and 28; and a binary counter 30. Coupled to these elements are two bistable circuits 32 and 34, two switches SW1 and SW2, and two gates 42 and 44. A battery is provided to maintain circuit states should power fail.

An output from counter 30 is coupled not only to input 17 but also to a decoder/display driver 36 having a liquid crystal or other digital display 38 connected to its output. The display 38 is arranged to indicate the gain of amplifier 16.

The operation of circuit 14 will now be described. For each transmission pulse TX per sounding, there are corresponding return echo signals which are fed to input 46 having already been partially time-variable gain (TVG) processed according to a linear law proportional to depth to compensate partially for signal loss with depth (in this case, the signal represents pressure not energy so that a full TVG would normally be between 20 log R and 10 log R - where R is range).

The function which is defined by the linear ramp generator 22 is in inverse relationship to the TVG process applied to the input signals. One such function is illustrated in Figures 4 and 5 which, in a given time window, decreases in a linear manner and then remains at a constant level until commencement of the next time window where the function is repeated. The transmission pulse TX is fed to an input 23 of the linear ramp generator 22 so as to commence each ramp.

The first step in the operation of the circuit is manually to reset it using switch SW1. This should preferably be done in smooth seas over relatively "soft" seabed conditions. The switch SW1 resets bistable circuit 32 and sets the output of the counter 30 to zero. As a result of the counter being set to zero, the gain of amplifier 16, and thus of the path 15, is zero. The comparator 19 compares the signal from the path with that from the linear ramp generator 22. Since the gain is initially zero, the signal from the output of amplifier 20 is below the level of that of the ramp generator 22, so that the output of the comparator 19 is zero. As will become clear, this condition allows the gain of the amplifier 16 to be incremented automatically in steps of 1/256. This incrementation is achieved via binary counter 30 which has a clock input coupled to the output of gate 42. Gate 42 has one input connected to the output of flip-flop 28 and another connected to receive TX pulses. The TX pulses pass through the gate 42 to the clock input of the binary counter 30, thus incrementing the counter and hence increasing the gain of the amplifier 16. This process is repeated until the signal from the amplifier 20 exceeds the level of the signal from the linear ramp generator 22. When this occurs, a pulse is produced by comparator 19 which flips the bistable circuit 26. A second such pulse from comparator 19 causes the second bistable circuit 28 to output a signal which latches the counter 30 to prevent it from being incremented further. The TX pulses thus have no further effect on the counter since the input to gate 42 from circuit 28 is then held high. The gain of the path 15 is thus fixed. The number of comparator signals which is required to latch the counter 30 is dictated by the number of bistable circuits, in this case two, once a signal appears on output 49. Thus, the latched level is a given number of steps lower than that at which the output signal first appears at 49, in order that the set level may not be held at too sensitive a level. Obviously, the number of signals or steps required can be altered by, for example, including a different number of bistable circuits, preferably between two and ten. In some embodiments circuitry can be included which is designed so that the number of steps for latching can be selected from a given range, e.g. in the range from two to ten steps.

Thus circuit 14 is designed so as automatically to adjust the gain and then latch it at a level such that only "good" signals, i.e. first bottom echoes resulting from the transducer axis being normal to the bottom of the sea, will produce a "control" pulse at output 49.

The trailing edge of the control pulse triggers one-shot 67 to produce a second control pulse whose start is on the trailing edge of the control pulse, i.e. just past the peak of the bottom-pulse and commencing approximately at the beginning of time period 12 in Figure 5. The length of the pulse is fixed. It may be used as a gating pulse for area 12 of Figure 5 as it only exists when 'good' data exists.

The second switch SW2 is an offset switch which can be operated manually to increment the gain above the automatically acquired gain setting to adjust manually for a safety margin. The LSB of the binary counter 30 is incremented by two steps for each push of switch SW2. Each push resets the circuits 26 and 28 to allow two more TX pulses to pass through gate 42 to further increase the gain of the amplifier 16 by two 1/256 steps before latching of counter 30 reoccurs. This may be repeated as necessary. Circuitry may be provided so as to be able to vary the number of steps with which the counter 30 is incremented before latching reoccurs, e.g. in the range from two to ten steps.

As will be appreciated, the signals input to the circuit may not be necessarily TVG processed according to a linear law. For example, in certain circumstances, a 20 or 40 log R law square or log law may be more appropriate. The ramp generator accordingly does not necessarily produce a linear function. In the present example, the function produced by the ramp generator varies inversely to the input TVG function. In general it will be chosen as a function of the TVG function so that the effect of signal loss with depth is substantially compensated, i.e. whatever is needed to compensate for inadequacies of the input TVG. In some cases it may be appropriate for the generator to produce a constant signal.

The circuit 14 can be fitted into apparatus such as described in European Patent Application No. 85302020.4 for real time surveying and seabed identification, especially for first bottom echo acquisition. Means may be added to signal bad data i.e. no acquisition.

Figure 8 shows part of a system into which circuit 14 can be connected. In this embodiment, the output 47 of the circuit 14 is coupled to E1 and E2 integrators 60 and 62 respectively. In an alternative, the circuit may be bypassed, i.e. input 46 connects to the integrators instead of output 49. The integrators 60 and 62 are coupled to E1 and E2 sample-and-hold circuits 64,66. The output 49 of comparator 19 is coupled to E1 and E2 gate generators generating time gates X & Y (Figure 5). In the alternative the output of one-shot 67 could couple to the gate generators. When comparator 19 produces a control signal at output 49, this causes the gates to be generated and thus the E1 and E2 values to be updated in the sample-and-hold circuits 64, 66, and to be displayed at 69. The E1 value is the result of integration over area X, as indicated in Figure 5. The E2 value is obtained by integrating over the area Y to encompass the whole of the second echo. The E1 and E2 values are displayed, as shown in Figure 9, as a point having respective X and Y coordinate points. From the position of the point, it is possible to ascertain the composition of the seabed. As shown in Figure 9, different areas of the display represent different types of seabed.

Once the gain is set, any input signal to the comparator 19 having an amplitude larger than that of the comparator ramp 22 will cause the signal data to be written into a microprocessor or memory circuit (not shown). Many modern systems use microprocessor control to store the captured data in memory, from which it can be written to paper or to a cathode ray tube display. The circuit described can be used so that the stored "picture" in memory is only updated by "good" signals. If no "good" component return is received for a period of, say, five seconds, the last stored signal data may be repeated until new "good" signals are received or alternatively the data write into memory may be frozen. This has the effect of producing a visually intelligible picture. The "tails" will be correct because the so-called "splash effect" will not be displayed.

It will be appreciated that the above circuit may be used to identify substantially vertical going beams during pitching and/or rolling of a ship. However, alternative means could be devised for giving this identification, e.g. using a gyro.

A variation of the above circuit provides means for modifying its operation once the level has been set as described above. These means thereafter become effective to carry out small changes of gain with a fast time constant so that the circuit gain will hunt over a small range. Thus, in this mode, if the signal falls below the initially set threshold that threshold will be reduced by a small amount. The resulting small range of thresholds extends downwardly from the initially set threshold to capture weaker reflections. This means may be selectably activated and de-activated.

Referring now to Figure 10, this illustrates a typical reflected signal resulting from the beam swinging and thus being transmitted and received at an angle to the normal of the seabed. This figure corresponds to Figure 4 in that it uses a bottom lock, but in this case with unsaturated signals and a different method of bottom definition. The start of a gating period B is determined in accordance with where that reflected signal would, in time, exceed the threshold value if the transducer were normal to the seabed i.e. the "true" bottom as determined when the transducer transmits normal to the seabed. This point is detected as already described in each swing of the transducer beam through the vertical. The end of the gating period B is determined by the moment the actual reflected signal exceeds the threshold value. This area can then be integrated and, from the resulting value, data can be assessed, e.g. the presence of fish can be determined.

Period A is commenced a predetermined time before B commences and is ended by the beginning of period B. The third period, period C, is commenced by the end of period B and ends a predetermined time after the commencement of the period so that the reflected signal has substantially ended. The data in period B or C or B + C could be integrated. The signal shown is normally held in a shift register the contents of which are displayed. The lack of a control signal indicating a vertical or near vertical transmission can be used to blank out the display of zone A (normally showing fish) which, in the case of lack of control signal, is found to contain misleading data.

As already indicated, other means may be used to detect the vertical beam in that application.

However it is done, one achieves a better bottom-locked situation than that shown in Figure 4, giving increased clarity and increased accuracy. Moreover, one can register the existence of "bad" bottom locked signals, i.e. those not reaching the threshold set by the circuit of Figure 7.

## Claims

1. A pulse echo processing device, for use with pulse/transmitting receiving equipment, the device comprising means (22) for defining a function, which may vary with time, and means (19) for comparing a received echo signal with that function to produce an output (49) when the level of the received echo signal exceeds the instantaneous level of said function, characterised by automatic means (30, 16) for repetitively adjusting the relative magnitude of said function and the received signal in dependence upon said output until a given relationship exists between said levels.

2. A device as claimed in claim 1, wherein said adjusting means are provided by means (16) for adjustably amplifying the received signal.

3. A device as claimed in claim 2, wherein said amplifying means includes a variable gain amplifier (16).

4. A device as claimed in claim 3, wherein there are feedback means (40, 26, 28, 30) between said comparing means and said variable gain amplifier.

5. A device as claimed in claim 1, wherein the adjusting means are provided by means for reducing the overall magnitude of said function.

6. A device as claimed in any one of claims 1 to 5, wherein said function is a linear function.

7. A device as claimed in any one of claims 1 to 5, wherein said function is a quadratic function.

8. A device as claimed in any one of claims 1 to 6, wherein said function defines a constant level with time.

9. A device as claimed in any one of the preceding claims when said device is incorporated in echo sounding equipment.

10. A device as claimed in any one of the preceding claims, and arranged so that the output of said device will cause received signals having an amplitude exceeding the instantaneous value of said function to be stored in storage means and/or displayed.

11. A device as claimed in any one of the preceding claims, wherein said device has means (SW1, 32) for initially resetting the state of the adjusting means (16).

12. A device as claimed in any one of the preceding claims and comprising time variable gain means connected upstream of the comparing means (19).

13. A device as claimed in claim 12, wherein the time variable gain means provides a function which has an inverse relationship with the said function of time.

14. A device as claimed in claim 12 or 13, wherein said time variable gain means provides a linear function.

15. A device as claimed in any one of the preceding claims, and comprising means (69) for displaying values of the first and second return echo signal components as a location having co-ordinates corresponding to said values.

16. A method of processing received echo pulses characterised by: transmitting a pulse; receiving a consequent echo signal; defining a function, which may vary with time; comparing the received signal with that function; producing an output when the level of the received signal exceeds the instantaneous level of the function; and repetitively adjusting the relative magnitude of the function and the received signal in dependence upon said output until a given relationship exists between said levels.

17. A method of echosounding characterised by using a swinging transmitting element to transmit pulses toward the bottom of a body of water, detecting the resulting reflected signals, determining when said transmitting element is transmitting substantially normal to the bottom and using the resulting reflected signal to locate the bottom echo pulse relative to the transmitted pulse, and using that location to define a time period in which to analyze the resulting return signal, wherein the processing of the return signal is carried cut by a method according to claim 16.

18. A method as claimed in claim 17 wherein the end of a time period for analysis is defined by the bottom echo location.

19. A method as claimed in claim 17 or 18, wherein the beginning of a time period for analysis is defined by the bottom echo location.

20. A method as claimed in claim 19, and including the step of ending the time period of claim 19 when the magnitude of the reflected signal exceeds a given threshold value.

21. A method as claimed in claim 19 or 20, wherein a time period is commenced by the end of the time period of claim 19.

22. A method as claimed in claim 21, wherein the time period of claim 21 ends a predetermined time after it commences.

23. A method as claimed in any one of claims 17 to 22, wherein an analyzing step comprises integrating tne signal in the or at least one said time period.

24. A method as claimed in claims 22 and 23, wherein the received signal in the time period of claim 21 is integrated alone or in combination with received signal from the time period of claim 19.

25. A method as claimed in any one of claims 18 to 24 when used in combination with the device of any one of claims 1 to 15.

26. An echosounder device characterised by a swinging transmitting element for transmitting pulses toward the bottom of a body of water, means for detecting the resulting reflected signal, means for determining when said transmitting element is transmitting substantially normal to the bottom means and for using the resulting reflected signal to locate the bottom echo pulse relative to the transmitted pulse, and means for using that location to define a time period in which to analyze the resulting return signal, the device also including a device according to any one of claims 1 to 15 for processing the reflected signal.

## Patentansprüche

1. Impulsecho-Verarbeitungsvorrichtung zur Verwendung mit einer Impuls-Sende/Empfangsanlage, wobei die Vorrichtung eine Einrichtung (22) umfasst zur Definition einer Funktion, die sich mit der Zeit ändern kann, sowie eine Einrichtung (19) zum Vergleich eines empfangenen Echosignals mit dieser Funktion, wobei eine Ausgabe (49) erstellt wird, wenn der Pegel des empfangenen Echosignals den momentanen Pegel der Funktion übersteigt, gekennzeichnet durch eine automatische Einrichtung (30, 16) zum wiederholten Einstellen der relativen Größe der Funktion und des empfangenen Signals in Abhängigkeit von der Ausgabe bis eine gegebene Beziehung zwischen den Pegeln besteht.

2. Vorrichtung nach Anspruch 1, wobei die Einstelleinrichtungen eine Einrichtung (16) aufweist zum einstellbaren Verstärken des empfangenen Signals.

3. Vorrichtung nach Anspruch 2, wobei die Verstärkereinrichtung einen Verstärker (16) mit variabler Verstärkung umfasst.

4. Vorrichtung nach Anspruch 3, wobei da Rückkopplungseinrichtungen (41, 26, 28, 30) sind zwischen der Vergleichseinrichtung und dem Verstärker mit variabler Verstärkung.

5. Vorrichtung nach Anspruch 1, wobei die Einstelleinrichtung mit einer Einrichtung versehen ist zur Reduktion der Gesamtgröße der Funktion.

6. Vorrichtung nach irgendeinem der Ansprüche 1 bis 5, wobei die Funktion eine lineare Funktion ist.

7. Vorrichtung nach irgendeinem der Ansprüche 1 bis 5, wobei die Funktion eine quadratische Funktion ist.

8. Vorrichtung nach irgendeinem der Ansprüche 1 bis 6, wobei die Funktion einen konstanten Pegel mit Zeit bestimmt.

9. Vorrichtung nach irgendeinem der vorhergehenden Ansprüche, wobei die Vorrichtung in einer Echoschallanlage aufgenommen ist.

10. Vorrichtung nach irgendeinem der vorhergehenden Ansprüche und so eingerichtet, dass die Ausgabe der Vorrichtung bewirkt, dass empfangene Signale eine Amplitude haben, welche den momentanen Wert der Funktion, die in Speichervorrichtungen abgelegt und/oder die dargestellt wird, übersteigt.

11. Vorrichtung nach irgendeinem der vorhergehenden Ansprüche, wobei die Vorrichtung eine Einrichtung (SW1, 32) hat zum Zurückstellen des Zustands der Einstelleinrichtung (16) an den Anfang.

12. Vorrichtung nach irgendeinem der vorhergehenden Ansprüche und mit einer zeitvariablen Verstärkereinrichtung, die stromauf der Vergleichseinrichtung (19) geschaltet ist.

13. Vorrichtung nach Anspruch 12, wobei die zeitvariable Verstärkereinrichtung eine Funktion bereitstellt, die eine inverse Beziehung hat zu der Funktion der Zeit.

14. Vorrichtung nach Anspruch 12 oder 13, wobei die zeitvariable Verstärkereinrichtung eine lineare Funktion bereitstellt.

15. Vorrichtung nach irgendeinem der vorhergehenden Ansprüche, umfassend eine Einrichtung (69) zur Darstellung der Werte der ersten und der zweiten zurückkommenden Echosignalbestandteile als eine Lokalisierung, deren Koordinaten diesen Werten entsprechen.

16. Vorrichtung zum Verarbeiten der empfangenen Echopulse, gekennzeichnet durch Senden eines Pulses; Empfangen eines resultierenden Echosignals; Definieren einer Funktion, die zeitveränderlich sein kann; Vergleichen des empfangenen Signals mit der Funktion; Erstellen einer Ausgabe, wenn der Pegel des empfangenen Signals den momentanen Pegel der Funktion übersteigt; und wiederholtes Einstellen der relativen Größe der Funktion und des empfangenen Signals in Abhängigkeit von der Ausgabe, bis eine gegebene Beziehung zwischen den Pegeln besteht.

17. Echolotverfahren, gekennzeichnet durch Verwenden eines schwingenden Sendeelements zum Übertragen von Pulsen zum Boden eines Wasserkörpers; Empfangen des resultierenden Reflexionssignals; Bestimmen, wann das Sendeelement im wesentlichen senkrecht zum Boden sendet; Verwenden des resultierenden Reflexionssignals, um den Bodenechopuls gegenüber dem Sendepuls zu lokalisieren; und Verwenden der Lokalisierung zur Definition einer Zeitdauer, während der das resultierende Rückkehrsignal analysiert wird, wobei das Verarbeiten des Rückkehrsignals erfolgt mit einem Verfahren nach Anspruch 16.

18. Verfahren nach Anspruch 17, wobei das Ende des Zeitabschnitts für die Analyse definiert wird aus der Lokalisierung des Bodenechos.

19. Verfahren nach Anspruch 17 oder 18, wobei der Beginn des Zeitabschnitts für die Analyse definiert wird durch die Bodenecholokalisierung.

20. Verfahren nach Anspruch 19, welches den Schritt umfasst: Beenden des Zeitabschnitts nach Anspruch 19, wenn die Größe des Reflexionssignals einen gegebenen Schwellenwert übersteigt.

21. Verfahren nach Anspruch 19 oder 20, wobei der Zeitabschnitt beginnt am Ende des Zeitabschnitts nach Anspruch 19.

22. Verfahren nach Anspruch 21, wobei der Zeitabschnitt nach Anspruch 21 nach einem vorgegebenen Zeitabschnitt, ab Beginn, endet.

23. Verfahren nach irgendeinem der Ansprüche 17 bis 22, wobei ein Analyseschritt das Integrieren des Signals in dem oder in mindestens einem der Zeitabschnitte umfasst.

24. Verfahren nach Anspruch 22 oder 23, wobei das empfangene Signal im Zeitabschnitt nach Anspruch 21 allein integriert wird oder zusammen mit dem empfangenen Signal aus dem Zeitabschnitt von Anspruch 19.

25. Verfahren nach irgendeinem der Ansprüche 18 bis 24 in Kombination mit der Vorrichtung nach irgendeinem der Ansprüche 1 bis 15.

26. Echoschallvorrichtung, gekennzeichnet durch ein schwingendes Sendeelement zum Senden von Pulsen zum Boden eines Wasserkörpers; Einrichtungen zum Erfassen des resultierenden Reflexionssignals; Einrichtungen zum Bestimmen, wann das Sendeelement im wesentlichen senkrecht zur Bodeneinrichtung sendet und zum Verwenden des resultierenden Reflexionssignals, um den Bodenechopuls gegenüber dem Sendepuls zu lokalisieren; sowie durch Einrichtungen, welche die Lokalisierung verwendet, um eine Zeitdauer zu bestimmen, während der das resultierende Rückkehrsignal analysiert wird, wobei die Vorrichtung auch eine Vorrichtung nach irgendeinem der Ansprüche 1 bis 15 beinhaltet zum Prozessieren des Reflexionssignals.

## Revendications

1. Dispositif de traitement d'impulsions d'écho à utiliser avec une installation émettrice et réceptrice d'impulsions, le dispositif comprenant un moyen (22) pour définir une fonction qui peut varier avec le temps et un moyen (19) pour comparer un signal d'écho reçu avec cette fonction et produire une sortie (49) quand le niveau du signal d'écho reçu dépasse le niveau instantané de ladite fonction. caractérisé par des moyens automatiques (30, 16) pour régler de façon répétée la valeur relative de ladite fonction et du signal reçu en fonction de ladite sortie jusqu'à ce qu'il existe une certaine relation entre lesdits niveaux.

2. Dispositif selon la revendication 1, dans lequel lesdits moyens de réglage comprennent un moyen (16) pour amplifier de façon réglable le signal reçu.

3. Dispositif selon la revendication 2, dans lequel ledit moyen d'amplification comprend un amplificateur (16) a gain variable.

4. Dispositif selon la revendication 3, dans lequel des moyens de rétro-action (40, 26, 28, 30) sont placés entre ledit moyen de comparaison et ledit amplificateur à gain variable.

5. Dispositif selon la revendication 1, dans lequel lesdits moyens de réglage sont formés par des moyens servant à réduire la valeur globale de ladite fonction.

6. Dispositif selon l'une quelconque des revendications 1 à 5, dans lequel ladite fonction est une fonction linéaire.

7. Dispositif selon l'une quelconque des revendications 1 à 5, dans lequel ladite fonction est une fonction quadratique.

8. Dispositif selon l'une quelconque des revendications 1 à 6, dans lequel ladite fonction définit un niveau constant dans le temps.

9. Dispositif selon l'une quelconque des précédentes revendications, dans lequel ledit dispositif est incorporé dans une installation d'échosondage.

10. Dispositif selon l'une quelconque des précédentes revendications, conçu pour que la sortie dudit dispositif fasse mémoriser dans un moyen de stockage, et/ou afficher, les signaux reçus qui ont une amplitude supérieure à la valeur instantanée de ladite fonction.

11. Dispositif selon l'une quelconque des précédentes revendications, dans lequel ledit dispositif comporte des moyens (SW1, 32) pour ré-initialiser au départ l'état des moyens de réglage (16).

12. Dispositif selon l'une quelconque des précédentes revendications, comprenant un moyen à gain variable dans le temps, branché en amont du moyen de comparaison (19).

13. Dispositif selon la revendication 12, dans lequel ledit moyen à gain variable dans le temps fournit une fonction qui est inversée par rapport à ladite fonction du temps.

14. Dispositif selon la revendication 12 ou 13, dans lequel ledit moyen à gain variable dans le temps fournit une fonction linéaire.

15. Dispositif selon l'une quelconque des précédentes revendications, comprenant un moyen (69) pour afficher les valeurs des premières et secondes composantes du signal d'écho renvoyé sous la forme d'une position dont les coordonnées correspondent auxdites valeurs.

16. Procédé de traitement d'impulsions d'écho reçues, caractérisé par : l'envoi d'une impulsion ; la réception d'un signal d'écho qui en découle ; la définition d'une fonction pouvant varier avec le temps ; la comparaison du signal reçu avec cette fonction ; la production d'une sortie lorsque le niveau du signal reçu dépasse le niveau instantané de la fonction ; et le réglage répété de la valeur relative de la fonction et du signal reçu en fonction de ladite sortie jusqu'à ce qu'il existe une relation donnée entre lesdits niveaux.

17. Procédé d'échosondage caractérisé par l'utilisation d'un élément émetteur oscillant pour envoyer des impulsions vers le fond d'une pièce d'eau, la détection des signaux réfléchis résultants, la détermination du moment où ledit élément émis est envoyé sensiblement normalement vers le fond et l'utilisation du signal réfléchi résultant pour localiser l'impulsion d'écho du fond correspondant à l'impulsion envoyée, et l'utilisation de cette localisation pour définir un intervalle de temps pendant lequel analyser le signal renvoyé résultant, dans lequel le traitement du signal d'écho est effectué selon le procédé de la revendication 16.

18. Procédé selon la revendication 17, dans lequel la fin de l'intervalle de temps d'analyse est définie par la position de l'écho du fond.

19. Procédé selon la revendication 17 ou 18, dans lequel le début de l'intervalle de temps d'analyse est défini par la position de l'écho du fond.

20. Procédé selon la revendication 19, comprenant l'étape consistant à terminer l'intervalle de temps de la revendication 19 quand la valeur du signal réfléchi dépasse une valeur de seuil définie.

21. Procédé selon la revendication 19 ou 20, dans lequel un intervalle de temps est déclenché par la fin de l'intervalle de temps de la revendication 19.

22. Procédé selon la revendication 21, dans lequel l'intervalle de temps de la revendication 21 se termine un temps prédéterminé après qu'il ait débuté.

23. Procédé selon l'une quelconque des revendications 17 à 22, dans lequel une étape d'analyse comprend l'integration au signal sur ledit intervalle de temps ou sur l'un au moins desdits intervalles de temps.

24. Procédé selon les revendications 22 et 23, dans lequel le signal reçu dans l'intervalle de temps de la revendication 21 est intégré seul, ou en association avec un signal reçu pendant l'intervalle de temps de la revendication 19.

25. Procédé selon l'une quelconque des revendications 18 à 24 utilisé en association avec le dispositif de l'une quelconque des revendications 1 à 15.

26. Appareil échosondeur caractérisé par un élément émetteur oscillant pour envoyer des impulsions vers le fond d'une pièce d'eau un moyen pour détecter le signal réfléchi résultant, un moyen pour déterminer quand ledit élément émis est envoyé sensiblement normalement au fond et pour utiliser le signal réfléchi résultant pour localiser l'impulsion d'écho du fond correspondant à l'impulsion envoyée, et un moyen pour utiliser cette localisation afin de définir un intervalle de temps pendant lequel analyser le signal renvoyé résultant, l'appareil comprenant aussi un dispositif selon l'une quelconque des revendications 1 à 15 pour traiter le signal réfléchi.
